(19) Europäisches Patentamt / European Patent Office / Office européen des brevets

(11) **EP 4 354 598 A1**

(12) **EUROPEAN PATENT APPLICATION**
published in accordance with Art. 153(4) EPC

(43) Date of publication:
**17.04.2024 Bulletin 2024/16**

(21) Application number: **21962830.2**

(22) Date of filing: **03.11.2021**

(51) International Patent Classification (IPC):
***H01M 50/102*** (2021.01)

(52) Cooperative Patent Classification (CPC):
**H01M 50/102; Y02E 60/10**

(86) International application number:
**PCT/CN2021/128461**

(87) International publication number:
**WO 2023/077312 (11.05.2023 Gazette 2023/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde City, Fujian 352100 (CN)**

(72) Inventors:
- **XU, Hu**
  **Ningde City, Fujian 352100 (CN)**
- **JIN, Haizu**
  **Ningde City, Fujian 352100 (CN)**
- **NIU, Shaojun**
  **Ningde City, Fujian 352100 (CN)**
- **LI, Xing**
  **Ningde City, Fujian 352100 (CN)**
- **LIU, Xiaomei**
  **Ningde City, Fujian 352100 (CN)**

(74) Representative: **Ran, Handong et al**
**Maucher Jenkins**
**Seventh Floor Offices**
**Artillery House**
**11-19 Artillery Row**
**London SW1P 1RT (GB)**

(54) **BATTERY CELL AND MANUFACTURING METHOD AND MANUFACTURING SYSTEM THEREFOR, AND BATTERY AND ELECTRIC APPARATUS**

(57) The embodiments of the present application provide a battery cell and a manufacturing method and manufacturing system therefor, and a battery and an electric apparatus. The battery cell in the present embodiment comprises an electrode assembly, a housing, and a first electrode terminal, wherein the housing is used for accommodating the electrode assembly, and an outer surface of the housing comprises an outer side face, which is parallel to a first direction, and a first surface, which is connected to the outer side face, the outer side face being arranged around the electrode assembly, and the first surface intersecting with the first direction; and the first electrode terminal is arranged on the first surface in a protruding manner and is configured to be electrically connected to the electrode assembly, and the first electrode terminal does not protrude, in the first direction, from the outermost end of the first surface in the first direction. By means of the present embodiment, the effective volume utilization rate of a battery cell in a battery is increased, and the energy density of the battery is improved.

Fig. 4

# Description

## TECHNICAL FIELD

The present application relates to the technical field of batteries, and in particular, to a battery cell, a method and system for manufacturing a battery cell, a battery and an electrical device.

## BACKGROUND

Battery cells are widely used in electronic equipment, such as a mobile phone, a portable computer, a battery car, an electric vehicle, an electric plane, an electric ship, an electric toy vehicle, an electric toy ship, an electric toy plane, and an electric tool, and the like. The battery cell may include a nickel-cadmium battery cell, a nickel-hydrogen battery cell, a lithium ion battery cell, a secondary alkaline zinc-manganese battery cell, and the like.

In the development of battery technology, how to improve the energy density is a research direction in battery technology.

## SUMMARY

The present application provides a battery cell, a method and system for manufacturing a battery cell, a battery and an electrical device, which can improve the energy density.

In a first aspect, the embodiments of the present application provide a battery cell including an electrode assembly, a casing, and a first electrode terminal. The casing is for accommodating the electrode assembly, an outer surface of the casing includes an outer side surface parallel to a first direction and a first surface connected with the outer side surface, the outer side surface is arranged surrounding the electrode assembly, the first surface intersects the first direction. The first electrode terminal is convexly arranged on the first surface and for electrically connecting with the electrode assembly, the first electrode terminal does not protrude, in the first direction, from an outermost end of the first surface along the first direction.

In the above solutions, the first electrode terminal does not protrude, in the first direction, from the outermost end of the first surface along the first direction. In this way, the first electrode terminal and the casing share some space in the first direction, thereby avoiding the first electrode terminal from additionally increasing the size of the battery cell in the first direction, the effective volume utilization of the battery cell in the battery is improved and the energy density of the battery is increased.

In some embodiments, in a direction perpendicular to the first direction, the first electrode terminal does not protrude from the outer side surface.

In the above solutions, in the direction perpendicular to the first direction, the first electrode terminal does not additionally increase the size of the battery cell, the effective volume utilization of the battery cell in the battery is improved and the energy density of the battery is increased.

In some embodiments, the outer side surface includes two second surfaces arranged oppositely along a second direction, and a third surface and a fourth surface arranged oppositely along a third direction, each of the second surfaces is connected with the third surface and the fourth surface, the first direction, the second direction and the third direction are perpendicular to each other. The first surface is connected to an end of the third surface along the first direction and inclines towards the fourth surface relative to the third surface, and the first surface is connected with the two second surfaces.

In the above solutions, the first surface inclines towards the fourth surface relative to the third surface, so that the first electrode terminal does not protrude, in the first direction, from the outermost end of the first surface along the first direction.

In some embodiments, an angle between the first surface and the third surface is $\theta$, and $90° < \theta < 180°$.

In the above solutions, the angle $\theta$ between the first surface and the third surface is an obtuse angle, so as to enable the first surface to have a certain size in the first direction and provide installing space for the first electrode terminal.

In some embodiments, $120° \leq \theta \leq 150°$.

If the size of the first surface along the first direction is fixed, the smaller the angle $\theta$, the greater the inclination of the first surface relative to the third surface, and the larger the size of the first surface along the third direction, more space on the outside of the first surface are wasted and the capacity of the battery cell is lower. Moreover, if the size of the first surface along the first direction is fixed, the larger the angle $\theta$, the less the inclination of the first surface with respect to the third surface, and the smaller the size of the first surface along the third direction Z, the space for installing the first electrode terminal on the outside of the first surface is smaller and the overcurrent capacity of the first electrode terminal is lower. In the above solutions, the angle $\theta$ is set in a range of 120°-150° to balance the capacity of the battery cell and the overcurrent capacity of the first electrode terminal as much as possible, so as to improve the performance of the battery cell.

In some embodiments, a size of the first surface along a fourth direction is L, a size of the first electrode terminal along the fourth direction is W, the fourth direction is parallel to the first surface and perpendicular to the second direction. A size of a part of the first electrode terminal protruding from the first surface along a fifth direction is H, the fifth direction is perpendicular to the first surface. L, W, H and $\theta$ satisfy $W \leq L\text{-}H/(\cos\theta\sin\theta)$.

In the above solutions, L, W, H and $\theta$ satisfy $W \leq L\text{-}H/(\cos\theta\sin\theta)$, so that the first electrode terminal does not protrude, in the first direction, from the outermost end of the first surface along the first direction.

In some embodiments, the second surface is a surface having the largest area among all surfaces of the casing.

In some embodiments, the first surface is connected with the third surface and the fourth surface.

The above solutions may increase the size of the first surface along the fourth direction to reserve more space for the first electrode terminal in the fourth direction, so as to improve the overcurrent capacity of the first electrode terminal.

In some embodiments, the outer surface of the casing further includes a fifth surface perpendicular to the first direction and connected with the two second surfaces, and the fifth surface is connected to an end of the first surface away from the third surface. The fifth surface is located at an outermost end of the battery cell along the first direction.

In the above solutions, the first surface is connected with the third surface and the fifth surface and inclines with respect to both the third surface and the fifth surface, in this way, the casing includes a notch G on the outside of the first surface, which reserves installing space for the first electrode terminal so that the first electrode terminal does not protrude, in the first direction, from the outermost end of the first surface along the first direction.

In some embodiments, the outer surface of the casing further includes a sixth surface connected with the two second surface. The battery cell further includes a second electrode terminal convexly arranged on the sixth surface and for electrically connecting with the electrode assembly, the second electrode terminal does not protrude, in the first direction, from an outermost end of the sixth surface along the first direction.

In the above solutions, the second electrode terminal does not protrude, in the first direction, from the outermost end of the sixth surface along the first direction. In this way, the second electrode terminal and the casing share some space in the first direction, thereby avoiding the second electrode terminal from additionally increasing the size of the battery cell in the first direction, the effective volume utilization of the battery cell in the battery is improved and the energy density of the battery is increased.

In some embodiments, the first surface and the sixth surface are respectively connected to two ends of the third surface along the first direction.

In the above solutions, the first electrode terminal and the second electrode terminal are respectively located at two sides of the third surface along the first direction.

In some embodiments, the first surface is connected to one end of the third surface along the first direction and one end of the fourth surface along the first direction, and the sixth surface is connected to the other end of the third surface along the first direction and the other end of the fourth surface along the first direction.

The above solutions may increase the size of the sixth surface to reserve more space for the second electrode terminal, so as to improve the overcurrent capacity of the second electrode terminal.

In some embodiments, the first surface is parallel to the sixth surface.

In some embodiments, the outer surface of the casing further includes a fifth surface and a seventh surface respectively located at two ends of the battery cell along the first direction. Two ends of the fifth surface along the second direction are respectively connected to the two second surfaces, two ends of the fifth surface along the third direction are respectively connected to the first surface and the fourth surface. Two ends of the seventh surface along the second direction are respectively connected to the two second surfaces, two ends of the seventh surface along the third direction are respectively connected to the sixth surface and the fourth surface.

In the above solutions, the sixth surface is connected with the third surface and the seventh surface and inclines with respect to both the third surface and the seventh surface, in this way, the casing includes a notch on the outside of the sixth surface, which reserves installing space for the second electrode terminal so that the second electrode terminal does not protrude, in the first direction, from the outermost end of the sixth surface along the first direction.

In some embodiments, the battery cell is symmetrical about a plane perpendicular to the first direction.

In the above solutions, when the battery cells are arranged along the second direction, the adjacent battery cells may be interleaved. In other words, for two adjacent battery cells, one of the battery cells may be rotated 180° based on the symmetry plane, so that the first electrode terminal of the one of the battery cells may adjacent to, along the second direction, the second electrode terminal of the other of the battery cells, so as to facilitate the bus component to connect the adjacent battery cells in series.

In some embodiments, the outer surface of the casing further includes a fifth surface and a seventh surface respectively located at two ends of the battery cell along the first direction. Two ends of the fifth surface along the second direction are respectively connected to the two second surfaces, two ends of the fifth surface along the third direction are respectively connected to the first surface and the fourth surface. Two ends of the seventh surface along the second direction are respectively connected to the two second surfaces, two ends of the seventh surface along the third direction are respectively connected to the sixth surface and the third surface. The sixth surface is connected with the fourth surface and inclines towards the third surface.

In the above solutions, the casing has two notches at opposite corners to provide installing space for the first electrode terminal and the second electrode terminal.

In some embodiments, the sixth surface is connected to an end of the fourth surface close to the first surface along the first direction, and the sixth surface inclines with respect to the fourth surface along a direction facing the first surface.

In the above solutions, the first electrode terminal and the second electrode terminal are installed at the same end of the battery cell, which facilitates simplifying the connection of the first electrode terminal and the second electrode terminal with the bus component when a plurality of battery cells are assembled into a group.

In some embodiments, the battery cell is symmetrical about a plane perpendicular to the third direction.

In the above solutions, when the battery cells are arranged along the second direction, the adjacent battery cells may be interleaved. In other words, for two adjacent battery cells, one of the battery cells may be rotated 180° based on the symmetry plane, so that the first electrode terminal of the one of the battery cells may adjacent to, along the second direction, the second electrode terminal of the other of the battery cells, so as to facilitate the bus component to connect the adjacent battery cells in series.

In some embodiments, the outer surface of the casing further includes a fifth surface and a seventh surface respectively located at two ends of the battery cell along the first direction. Two ends of the fifth surface along the second direction are respectively connected to the two second surfaces, two ends of the fifth surface along the third direction are respectively connected to the first surface and the sixth surface. Two ends of the seventh surface along the second direction are respectively connected to the two second surfaces, two ends of the seventh surface along the third direction are respectively connected to the third surface and the fourth surface.

In some embodiments, the electrode assembly includes a plurality of positive electrode plates and a plurality of negative electrode plates, and the plurality of positive electrode plates and the plurality of negative electrode plates are alternately stacked along the second direction.

In the above solutions, both the positive electrode plate and the negative electrode plate are sheet-like structures whose shapes may be adjusted according to the shape of the casing, which allows the electrode assembly to fully utilize the internal space of the casing, the energy density of the battery cell is increased.

In some embodiments, a maximum size of the battery cell along the first direction is in a range of 200 mm-2000 mm.

In the above solutions, the battery cell may have a large size in the first direction to reduce the battery cells in the battery and reduce the fixing structures for fixing the battery cells, the space utilization is improved and the energy density of the battery is increased.

In a second aspect, the embodiments of the present application provide a battery, including a plurality of the battery cells of any of the embodiments of the first aspect.

In a third aspect, the embodiments of the present application provide an electrical device, including the battery cell of any of embodiments of the first aspect for providing electrical energy.

In a fourth aspect, the embodiments of the present application provide a method for manufacturing a battery cell, including:

    providing an electrode assembly;
    providing a casing and a first electrode terminal, an outer surface of the casing including an outer side surface parallel to a first direction and a first surface connected with the outer side surface, the first surface intersecting the first direction, the first electrode terminal being convexly arranged on the first surface and not protruding, in the first direction, from an outermost end of the first surface along the first direction; and
    installing the electrode assembly into the casing and electrically connecting the first electrode terminal with the electrode assembly;
    in which the outer side surface is arranged surrounding the electrode assembly.

In a fifth aspect, the embodiments of the present application provide a system for manufacturing a battery cell, including:

    a first providing means for providing an electrode assembly;
    a second providing means for providing a casing and a first electrode terminal, an outer surface of the casing including an outer side surface parallel to a first direction and a first surface connected with the outer side surface, the first surface intersecting the first direction, the first electrode terminal being convexly arranged on the first surface and not protruding, in the first direction, from an outermost end of the first surface along the first direction; and
    an assembling means for installing the electrode assembly into the casing and electrically connecting the first electrode terminal with the electrode assembly;
    in which the outer side surface is arranged surrounding the electrode assembly.

## BRIEF DESCRIPTION OF THE DRAWINGS

In order to more clearly describe technical solutions of the embodiments of the present application, the drawings that need to be used in the embodiments of the present application will be briefly introduced below. Obviously, the drawings described below are merely some embodiments of the present application. For those of ordinary skill in the art, without creative work, other drawings can be obtained based on the drawings.

Fig. 1 shows a schematic structural diagram of a vehicle according to some embodiments of the present application;

Fig. 2 shows a schematic exploded diagram of a battery according to some embodiments of the present application;

Fig. 3 shows a schematic structural diagram of a battery cell according to some embodiments of the present application;

Fig. 4 shows a schematic front view of the battery cell as shown in Fig. 3;

Fig. 5 shows a schematic cross-sectional view of the battery cell as shown in Fig. 4 along the direction A-A;

Fig. 6 shows a schematic enlarged view of the battery cell as shown in Fig. 4 at the round frame B;

Fig. 7 shows a schematic front view of a battery cell according to some other embodiments of the present application;

Fig. 8 shows a schematic front view of a battery cell according to some other embodiments of the present application;

Fig. 9 shows a schematic front view of a battery cell according to some other embodiments of the present application;

Fig. 10 shows a schematic flowchart of a method for manufacturing a battery cell according to some embodiments of the present application; and

Fig. 11 shows a schematic block diagram of a system for manufacturing a battery cell according to some embodiments of the present application.

In the drawings, the drawings are not drawn to actual scale.

**DETAILED DESCRIPTION**

In order to make the purposes, technical solutions and advantages of the embodiments of the present application clearer, the technical solutions in the embodiments of the present application will be clearly described below in conjunction with the drawings in the embodiments of the present application. Obviously, the described embodiments are some, but not all, of the embodiments of the present application. Based on the embodiments in the present application, all other embodiments obtained by those of ordinary skill in the art without creative work fall within the protection scope of the present application.

Unless otherwise defined, all technical and scientific terms used in the present application have the same meanings as commonly understood by those skilled in the technical field of the present application; in the present application, the terms used in the description are only for describing the specific embodiments, and are not intended to limit the present application; the terms "comprising" and "having" in the description and claims of the present application and the above description of the drawings and any variations thereof are intended to cover non-exclusive inclusions. The terms "first", "second" and the like in the description and claims of the present application or the above drawings are used to distinguish different objects, rather than to describe a specific order or primary and secondary relationship.

Reference to "embodiment" in the present application means that a particular feature, structure or characteristic described in connection with the embodiment may be included in at least one embodiment of the present application. Appearances of the phrase in various places in the specification are not necessarily all referring to the same embodiment, nor a separate or alternative embodiment that is mutually exclusive of other embodiments.

In the description of the present application, it should be noted that, unless otherwise expressly specified and limited, the terms "install", "connect", "connection" and "attach" should be understood in a broad sense, for example, they may refer to a fixed connection, or a detachable connection, or an integral connection; they may refer to a direct connection, or an indirect connection through an intermediate medium, or an internal communication between two components. For those of ordinary skill in the art, the specific meanings of the above terms in the present application can be understood according to specific situations.

Term "and/or" in the present application represents only a kind of association relationship that describes associated objects, and indicates that there can be three kinds of relationships. For example, A and/or B may indicate: A alone, A and B, and B alone. In addition, the character "/" in the present application generally indicates an "or" relationship for the related objects.

In the embodiments of the present application, "parallel" includes not only the absolute parallel situation, but also the generally parallel situation as conventionally known in engineering; and moreover, "vertical" includes not only the absolute vertical situation, but also the generally vertical situation as conventionally known in engineering.

In the embodiments of the present application, the same reference numerals denote the same components, and for brevity, detailed description of the same components are omitted in different embodiments. It should be understood that sizes, such as a thickness, a length and a width, etc., of various components in the embodiments of the present application as shown in the drawings, as well as an overall thickness, a length and a width, etc. of an integrated device are only exemplary, and should not constitute any limitation to the present application.

The "plurality" that appears in the present application refers to two or more (including two).

In the present application, the battery cell may include a lithium ion secondary battery cell, a lithium ion primary battery cell, a lithium sulfur battery cell, a sodium lithium ion battery cell, a sodium ion battery cell or a magnesium ion battery cell, etc., which is not limited in the embodiments of the present application.

The battery mentioned in the embodiments of the present application refers to a single physical module including one or more battery cells to provide a higher voltage and capacity. For example, the battery mentioned in the present application may be a battery module or a battery pack and the like. The battery typically includes a box body for enclosing one or more battery cells. The box body may prevent liquids or other foreign objects from affecting the charging or discharging of the battery cell.

The battery cell includes an electrode unit and electrolyte, and the electrode unit includes a positive electrode plate, a negative electrode plate and a separator. The battery cell mainly relies on the movement of metal ions between the positive electrode plate and the negative electrode plate to work. The positive electrode plate includes a positive electrode current collector and a positive electrode active material layer coated on a surface of the positive electrode current collector; the positive electrode current collector includes a positive electrode current-collecting component and a positive electrode tab, the positive electrode current-collecting component is coated with the positive electrode active material layer, and the positive electrode tab is not coated with the positive electrode active material layer. Taking the lithium ion battery as an example, the material of the positive electrode current collector may be aluminum, the positive electrode active material layer includes a positive electrode active material which may be lithium cobalt oxide, lithium iron phosphate, ternary lithium or lithium manganate, etc. The negative electrode plate includes a negative electrode current collector and a negative electrode active material layer coated on a surface of the negative electrode current collector; the negative electrode current collector includes a negative electrode current-collecting component and a negative electrode tab, the negative electrode current-collecting component is coated with the negative electrode active material layer, and the negative electrode tab is not coated with the negative electrode active material layer. The material of the negative electrode current collector may be copper, the negative electrode active material layer includes a negative electrode active material which may be carbon or silicon, and the like. The material of the separator may be PP (polypropylene) or PE (polyethylene), and the like.

The battery cell further includes a casing and an electrode terminal, an electrode assembly is accommodated in the casing, and the electrode terminal is installed on the casing and electrically connected with the electrode assembly to derive electrical energy from the electrode assembly.

With the development of battery technology, the user's demand for the capacity of the battery is getting greater and greater. For example, with the increasing popularity of new energy vehicles, the requirements for the use of batteries in new energy vehicles become higher and higher. The user's requirements for the mileage of new energy vehicles are increasing, and the capacity of the batteries used in new energy vehicles needs to be continuously increased.

The battery includes a box body and a plurality of battery cells accommodated in the box body, and the plurality of battery cells are connected in series, parallel or a mixed connection through a bus component. Generally, the electrode terminal protrudes from the casing to facilitate connection to the external bus component.

However, the inventors found that the installing position of the electrode terminal may directly affect the space occupied by the battery cell within the box body. In the related technology, the electrode terminal is usually installed on the end face of the casing, which increases the size of the battery cell and the space occupied by the battery cell within the box body, the space utilization inside the battery is reduced and thus the energy density of the battery is low.

In view of this, the embodiments of the present application provide a technical solution, in which a battery cell including an electrode assembly, a casing, and a first electrode terminal. The casing is for accommodating the electrode assembly, an outer surface of the casing includes an outer side surface parallel to a first direction and a first surface connected with the outer side surface, the outer side surface is arranged surrounding the electrode assembly, the first surface intersects the first direction. The first electrode terminal is convexly arranged on the first surface and for electrically connecting with the electrode assembly, the first electrode terminal does not protrude, in the first direction, from an outermost end of the first surface along the first direction. In the technical solution, the first electrode terminal does not protrude, in the first direction, from the outermost end of the first surface along the first direction, therefore the first electrode terminal does not occupy additional space in the first direction, the size of the battery cell is reduced, the space utilization inside the battery is improved and the energy density of the battery is increased.

The technical solutions described in the embodiments of the present application are applicable to a battery and an electrical device using a battery.

The electrical device may be a vehicle, a mobile phone, a portable device, a portable computer, a ship, a spacecraft, an electric toy, an electric tool, and the like. The vehicle may be a fuel vehicle, a gas vehicle or a new energy vehicle, and the new energy vehicle may be a pure electric vehicle, a hybrid vehicle or an extended-range vehicle, etc.; the spacecraft includes an airplane, a rocket, a space shuttle, a spacecraft, etc.; the electric toy includes a fixed or movable electric toy, such as a game console, an electric vehicle toy, an electric ship toy and an electric plane toy, etc.; the electric tool includes a metal-cutting electric tool, a grinding electric tool, an assembling electric tool and a railway electric tool, for example, an electric drill, an electric grinder, an electric wrench, an electric screwdriver, an electric hammer, an electric impact drill, a concrete vibrator and an electric planer, etc. The embodiments of the present application do not impose special restrictions on the above-mentioned electrical device.

In the following embodiments, for convenience of description, for example, the electrical device is a vehicle.

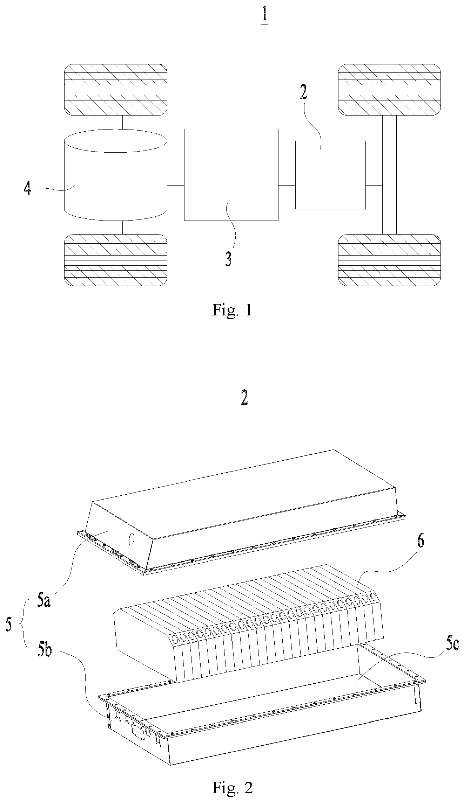

Fig. 1 shows a schematic structural diagram of a vehicle according to some embodiments of the present application.

As shown in Fig. 1, a battery 2 is arranged inside a vehicle 1, and the battery 2 may be arranged at the bottom, the head or the tail of the vehicle 1. The battery 2 may be used for power supply of the vehicle 1, for example, the battery 2 may be used as an operating power source of the vehicle 1.

The vehicle 1 may further include a controller 3 and a motor 4, and the controller 3 is used to control the battery 2 to supply power to the motor 4, for example, for operating power demands while the vehicle 1 is starting, navigating, and driving.

In some embodiments of the present application, the battery 2 not only may be used as the operating power source of the vehicle 1, but also may be used as a driving power source of the vehicle 1 to provide driving power for the vehicle 1 instead of or partially instead of fuel or natural gas.

Fig. 2 shows a schematic exploded diagram of a battery according to some embodiments of the present application.

As shown in Fig. 2, the battery 2 includes a box body 5 and battery cells 6 accommodated within the box body 5.

The box body 5 is used for accommodating the battery cells 6 and may be of various structures. In some embodiments, the box body 5 may include a first box body portion 5a and a second box body portion 5b, the first box body portion 5a and the second box body portion 5b are covered with each other and collectively define an accommodating space 5c for accommodating the battery cells 6. The second box body portion 5b may be a hollow structure with one side open, the first box body portion 5a is a plate-like structure, and the first box body portion 5a covers an opening side of the second box body portion 5b, so as to form the box body 5 having the accommodating space 5c; or both the first box body portion 5a and the second box body portion 5b may be hollow structures with one side open, and an opening side of the first box body portion 5a covers the opening side of the second box body portion 5b, so as to form the box body 5 having the accommodating space 5c. Of course, the first box body portion 5a and the second box body portion 5b may have various shapes, for example, a cylinder, a cuboid, and the like.

In order to improve the airtightness after the first box body portion 5a and the second box body portion 5b are connected, a sealing member, such as sealant and a sealing ring, may be further arranged between the first box body portion 5a and the second box body portion 5b.

Assuming that the first box body portion 5a covers the top of the second box body portion 5b, the first box body portion 5a may also be referred to as an upper box cover and the second box body portion 5b may also be referred to as a lower box body.

In the battery 2, there may be one battery cell 6 or a plurality of battery cells 6. If there are a plurality of battery cells 6, the plurality of battery cells 6 may be connected in series, parallel or a mixed connection. The mixed connection means that the plurality of battery cells 6 are connected in both of series and parallel.

The plurality of battery cells 6 may be directly connected together in series, parallel or a mixed connection as a whole, and then accommodated within the box body 5; or the plurality of battery cells 6 may be connected in series, parallel or a mixed connection to form a battery module, and then a plurality of battery modules are connected in series, parallel or a mixed connection as a whole and accommodated within the box body 5.

In some embodiments, the whole formed by the battery cells 6 is installed directly to the box body 5. In this way, the process of combining the plurality of battery cells 6 into the battery module can be eliminated, and the fixing frame used to fix the battery cells 6 in the battery module is eliminated, which simplifies the structure of the battery and increases the energy density of the battery.

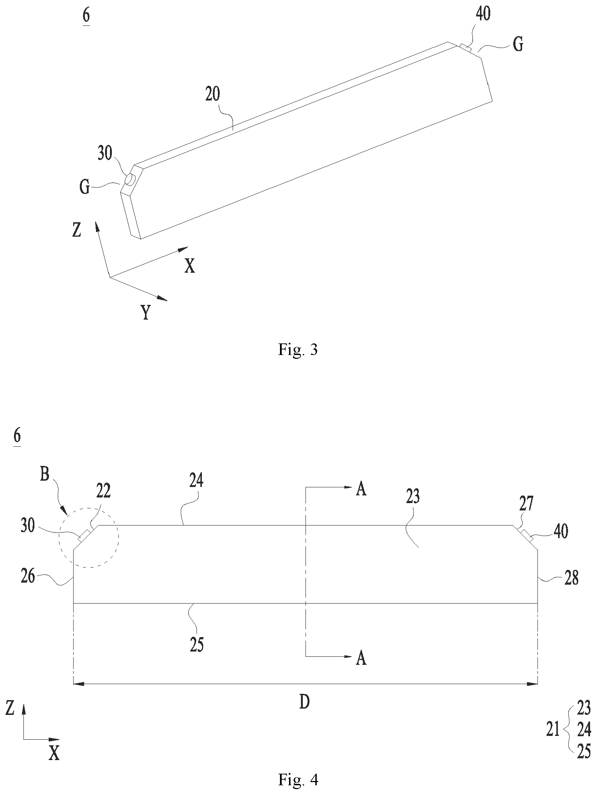

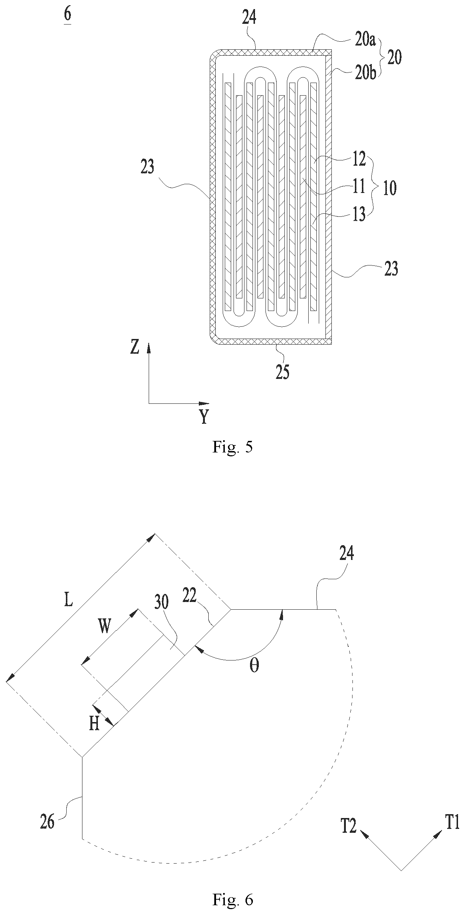

Fig. 3 shows a schematic structural diagram of a battery cell according to some embodiments of the present application; Fig. 4 shows a schematic front view of the battery cell as shown in Fig. 3; Fig. 5 shows a schematic cross-sectional view of the battery cell as shown in Fig. 4 along the direction A-A; and Fig. 6 shows a schematic enlarged view of the battery cell as shown in Fig. 4 at the round frame B.

As shown in Figs. 3-6, the embodiments of the present application provide a battery cell 6 which includes an electrode assembly 10, a casing 20, and a first electrode terminal 30. The casing 20 is for accommodating the electrode assembly 10, an outer surface of the casing 20 includes an outer side surface 21 parallel to a first direction X and a first surface 22 connected with the outer side surface 21, the outer side surface 21 is arranged surrounding the electrode assembly 10, the first surface 22 intersects the first direction X. The first electrode terminal 30 is convexly arranged on the first surface 22 and for electrically connecting with the electrode assembly 10, the first electrode terminal 30 does not protrude, in the first direction X, from an outermost end of the first surface 22 along the first direction X.

The electrode assembly 10 is the core component for the battery cell 6 to achieve the charge and discharge function, which includes a positive electrode plate 11, a negative electrode plate 12, and a separator 13. The positive electrode plate 11 and the negative electrode plate 12 are of opposite polarities, and the separator 13 is used to insulate and isolate the positive electrode plate 11 and the negative electrode plate 12. The electrode assembly 10 mainly relies on the movement of metal ions between the positive electrode plate 11 and the negative electrode plate 12 to work.

There may be one electrode assembly 10 or a plurality of electrode assemblies 10. If there are a plurality of electrode assemblies 10, the plurality of electrode assemblies 10 may be arranged in a cascade way, and the cascade direction of the plurality of electrode assemblies 10 may be perpendicular to the first direction X.

The casing 20 is a hollow structure within which an accommodating cavity for accommodating the electrode assembly 10 and electrolyte is formed. The casing 20 may have various shapes, for example, a cylinder, a cuboid, and the like. The shape of the casing 20 may be determined based on the specific shape of the electrode assembly 10. For example, if the electrode assembly 10 is a cylindrical structure, a cylindrical casing may be selected; and if the electrode assembly 10 is a cuboid structure, a cuboid casing may be selected.

The outer side surface 21 is an annular surface that surrounds the outer side of the electrode assembly 10 and is overall parallel to the first direction X. The first surface 22 is connected to an end of the outer side surface 21 along the first direction X and intersects the first direction X. Exemplarily, the first surface 22 may be planar, and an angle between the first surface 22 and the first direction X is greater than 0° and less than 90°.

The first electrode terminal 30 is for electrically connecting with the electrode assembly 10 to derive electrical energy from the electrode assembly 10. Exemplarily, the first electrode terminal 30 is electrically connected to one of the positive electrode plate 11 and the negative electrode plate 12. For example, the first electrode terminal 30 may be connected to the positive electrode plate 11 directly or through other conductive structures.

The first electrode terminal 30 is convexly arranged on the first surface 22 to facilitate connection to the external bus component. The first electrode terminal 30 may be wholly or only partially convexly arranged on the first surface 22. For example, a portion of the first electrode terminal 30 may pass through the casing 20 and extend into the interior of the casing 20, so as to achieve the electrical connection of the first electrode terminal 30 and the positive electrode plate 11.

The battery cell 6 may be clamped by two virtual planes perpendicular to the first direction X, and the maximum size of the battery cell 6 along the first direction X is the spacing between the two virtual planes. These two virtual planes are introduced to facilitate understanding of the maximum size of the battery cell 6 along the first direction X and do not physically exist in the embodiments of the present application.

The two virtual planes are defined as a first virtual plane and a second virtual plane, respectively, in which the first virtual plane clamps the battery cell 6 from a side close to the first electrode terminal 30. The outermost end of the first surface 22 along the first direction X is the end of the first surface 22 closest to the first virtual plane in the first direction X.

In the embodiment, the first electrode terminal 30 does not protrude, in the first direction X, from the outermost end of the first surface 22 along the first direction X. In this way, the first electrode terminal 30 and the casing 20 share some space in the first direction X, thereby avoiding the first electrode terminal 30 from additionally increasing the size of the battery cell 6 in the first direction X, the effective volume utilization of the battery cell 6 in the battery is improved and the energy density of the battery is increased.

In some embodiments, the maximum size D of the battery cell 6 along the first direction X is in a range of 200 mm-2000 mm. Alternatively, D may be 200 mm, 400 mm, 500 mm, 1000 mm, 1200 mm, 1500 mm, or 2000 mm.

Exemplarily, D satisfies: 400 mm $\leq$ D $\leq$ 1200 mm.

Exemplarily, the first direction X is parallel to the length direction of the battery cell 6.

For the battery, if the battery capacity is fixed, the smaller the battery cell 6, the more the battery cells 6, and more fixing structures need to be arranged in the box body to fix the battery cells 6, which will cause low space utilization inside the battery, the energy density of the battery cannot meet the requirements.

The embodiment allows the battery cell 6 to have a large size in the first direction X to reduce the battery cells 6 in the battery and reduce the fixing structures for fixing the battery cells 6, the space utilization is improved and the energy density of the battery is increased.

In some embodiments, the battery cell 6 is long enough to fit the size of the box body, and a plurality of battery cells 6 can be directly arranged in the box body side by side without assembling the battery cells 6 into a battery module, which eliminates the frame structure for fixing the battery cells 6 in the battery module, the internal space of the battery is saved, the space utilization and energy density of the battery is improved, the assembly process of the battery cell 6 is simplified and the cost is reduced.

In some embodiments, in a direction perpendicular to the first direction X, the first electrode terminal 30 does not protrude from the outer side surface 21.

In the embodiment, in the direction perpendicular to the first direction X, the first electrode terminal 30 does not additionally increase the size of the battery cell 6, therefore the effective volume utilization of the battery cell 6 in the battery is improved and the energy density of the battery is increased.

When a plurality of battery cells 6 of the battery are arranged along the direction perpendicular to the first direction X, the first electrode terminal 30 does not abut against the outer side surface 21 of the adj acent battery cell 6, the gap between the outer side surfaces 21 of adjacent battery cells 6 is reduced and the energy density of the battery is increased.

In some embodiments, the outer side surface 21 includes two second surfaces 23 arranged oppositely along a second direction Y, and a third surface 24 and a fourth surface 25 arranged oppositely along a third direction Z, each of the second surfaces 23 is connected with the third surface 23 and the fourth surface 24, the first direction X, the second direction Y and the third direction Z are perpendicular to each other. The first surface 22 is connected to an end of the third surface 24 along the first direction X and inclines towards the fourth surface 25 relative to the third surface 24, and the first surface 22 is connected with the two second surfaces 23.

Exemplarily, the second surface 23 is perpendicular to the second direction Y, and the third surface 24 and the fourth surface 25 are both perpendicular to the third direction Z. The second surface 23 is perpendicular to the third surface 24 and the fourth surface 25.

Exemplarily, the first surface 22 is parallel to the second direction Y, i.e., first surface 22 is perpendicular to the second surface 23.

Two ends of the third surface 24 along the second direction Y are connected to the two second surfaces 23, respectively. The third surface 24 may be connected with the second surfaces 23 directly or through other surfaces. Exemplarily, the third surface 24 and the second surfaces 23 may be connected by rounded surfaces; optionally, the rounded surface is a surface formed by the rounded corners arranged on the casing 20. Two ends of the fourth surface 25 along the second direction Y are connected to the two second surfaces 23, respectively. The fourth surface 25 may be connected with the second surfaces 23 directly or through other surfaces. Exemplarily, the fourth surface 25 and the second surfaces 23 may be connected by rounded surfaces.

Two ends of the first surface 22 along the second direction Y are connected to the two second surfaces 23, respectively. The first surface 22 may be connected with the second surfaces 23 directly or through other surfaces.

The first surface 22 may be connected to an end of the third surface 24 along the first direction X directly or through other surfaces (e.g., a rounded surface).

In the embodiments of the present application, the first surface 22 inclines towards the fourth surface 25 relative to the third surface 24, so that the first electrode terminal 30 does not protrude, in the first direction X, from the outermost end of the first surface 22 along the first direction X.

In some embodiments, an angle between the first surface 22 and the third surface 24 is $\theta$, and $90° < \theta < 180°$.

In the embodiment, the angle $\theta$ between the first surface 22 and the third surface 24 is an obtuse angle, so as to enable the first surface 22 to have a certain size in the first direction X and provide installing space for the first electrode terminal 30.

In some embodiments, $\theta$ satisfies: $120° \leq \theta \leq 150°$.

If the size of the first surface 22 along the first direction X is fixed, the smaller the angle $\theta$, the greater the inclination of the first surface 22 relative to the third surface 24, and the larger the size of the first surface 22 along the third direction Z, more space on the outside of the first surface 22 are wasted and the capacity of the battery cell 6 is lower. Moreover, if the size of the first surface 22 along the first direction X is fixed, the larger the angle $\theta$, the less the inclination of the first surface 22 with respect to the third surface 24, and the smaller the size of the first surface 22 along the third direction Z, the space for installing the first electrode terminal 30 on the outside of the first surface 22 is smaller and the overcurrent capacity of the first electrode terminal 30 is lower.

The inventors set the angle $\theta$ in a range of 120°-150° after experiments to balance the capacity of the battery cell 6 and the overcurrent capacity of the first electrode terminal 30 as much as possible, so as to improve the performance of the battery cell 6.

In some embodiments, a size of the first surface 22 along a fourth direction T1 is L, a size of the first electrode terminal 30 along the fourth direction T1 is W, the fourth direction T1 is parallel to the first surface 22 and perpendicular to the second direction Y A size of a part of the first electrode terminal 30 protruding from the first surface 22 along a fifth direction T2 is H, the fifth direction T2 is perpendicular to the first surface 22. L, W, H and $\theta$ satisfy: $W \leq L - H/(\cos\theta \sin\theta)$.

The size W of the first electrode terminal 30 along the fourth direction T1 refers to the maximum size, along the fourth direction T1, of the portion of the first electrode terminal 30 located on the outside of the first surface 22.

In the embodiment, L, W, H and $\theta$ satisfy $W \leq L - H/(\cos\theta \sin\theta)$, so that the first electrode terminal 30 does not protrude, in the first direction X, from the outermost end of the first surface 22 along the first direction X.

In some embodiments, L, W, H and $\theta$ satisfy $W = L - H/(\cos\theta \sin\theta)$.

The first electrode terminal 30 is used to connect with the bus component. The larger the size W, the larger the area of the first electrode terminal 30 available for connecting with the bus component, and the higher the overcurrent capacity of the first electrode terminal 30. The embodiment allows the maximum value of W to increase the overcurrent capacity of the first electrode terminal 30.

In some embodiments, $0 < H \leq 10$ mm. Optionally, $0.2$ mm $\leq H \leq 5$ mm。

In some embodiments, the second surface 23 is a surface having the largest area among all surfaces of the casing 20.

The area of the second surface 23 is greater than the area of the first surface 22, the area of the third surface 24, and the area of the fourth surface 25.

In some embodiments, the outer surface of the casing 20 further includes a fifth surface 26 perpendicular to the first direction X and connected with the two second surfaces 23, and the fifth surface 26 is connected to an end of the first surface 22 away from the third surface 24. The fifth surface 26 is located at an outermost end of the battery cell 6 along the first direction X.

Two ends of the fifth surface 26 along the second direction Y are connected to the two second surfaces 23, respectively. The fifth surface 26 may be connected with the second surfaces 23 directly or indirectly through rounded surfaces.

The fifth surface 26 may be connected with the first surface 22 directly or indirectly through a rounded surface.

The fifth surface 26 is located at the outermost end of the battery cell 6 along the first direction X, i.e., the fifth surface 26 is coplanar with the first virtual plane.

In the embodiment, the first surface 22 is connected with the third surface 24 and the fifth surface 26 and inclines with respect to both the third surface 24 and the fifth surface 26, in this way, the casing 20 includes a notch G on the outside of the first surface 22, which reserves installing space for the first electrode terminal 30 so that the first electrode terminal 30 does not protrude, in the first direction X, from the outermost end of the first surface 22 along the first direction X.

In some embodiments, the outer surface of the casing 20 further includes a sixth surface 27 connected with the two second surfaces 23. The battery cell 6 further includes a second electrode terminal 40 convexly arranged on the sixth surface 27 and for electrically connecting with the electrode assembly 10, the second electrode terminal 40 does not protrude, in the first direction X, from an outermost end of the sixth surface 27 along the first direction X.

Two ends of the sixth surface 27 along the second direction Y are connected to the two second surfaces 23, respectively. The sixth surface 27 may be connected with the second surfaces 23 directly or through rounded surfaces.

Exemplarily, the sixth surface 27 is perpendicular to the second surfaces 23.

Exemplarily, the second electrode terminal 40 is electrically connected to the negative electrode plate 12. The second electrode terminal 40 may be connected to the negative electrode plate 12 directly or through other conductive structures.

The first electrode terminal 30 and the second electrode terminal 40 are used as two output terminals of the battery cell 6 to draw electrical energy out of the electrode assembly 10.

The second electrode terminal 40 may be wholly or only partially convexly arranged on the sixth surface 27. For example, a portion of the second electrode terminal 40 may pass through the casing 20 and extend into the interior of the casing 20, so as to achieve the electrical connection of the second electrode terminal 40 and the negative electrode plate 12.

In the embodiment, the second electrode terminal 40 does not protrude, in the first direction X, from the outermost end of the sixth surface 27 along the first direction X. In this way, the second electrode terminal 40 and the casing 20 share some space in the first direction X, thereby avoiding the second electrode terminal 40 from additionally increasing the size of the battery cell 6 in the first direction X, the effective volume utilization of the battery cell 6 in the battery is improved and the energy density of the battery is increased.

In some embodiments, the first surface 22 and the sixth surface 27 are respectively connected to two ends of the third surface 24 along the first direction X.

In the embodiment, the first electrode terminal 30 and the second electrode terminal 40 are respectively located at two sides of the third surface 24 along the first direction X.

In some embodiments, the outer surface of the casing 20 further includes a fifth surface 26 and a seventh surface 28 respectively located at two ends of the battery cell 6 along the first direction X. Two ends of the fifth surface 26 along the second direction Y are respectively connected to the two second surfaces 23, two ends of the fifth surface 26 along the third direction Z are respectively connected to the first surface 22 and the fourth surface 25. Two ends of the seventh surface 28 along the second direction Y are respectively connected to the two second surfaces 23, two ends of the seventh surface 28 along the third direction Z are respectively connected to the sixth surface 27 and the fourth surface 25.

Two ends of the seventh surface 28 along the second direction Y are connected to the two second surfaces 23, respectively. The seventh surface 28 may be connected with the second surfaces 23 directly or indirectly through rounded surfaces.

The seventh surface 28 may be connected with the sixth surface 27 and the fourth surface 25 directly or indirectly through rounded surfaces.

The fifth surface 26 is coplanar with the first virtual plane and the seventh surface 28 is coplanar with the second virtual plane.

In the embodiment, the sixth surface 27 is connected with the third surface 24 and the seventh surface 28 and inclines with respect to both the third surface 24 and the seventh surface 28, in this way, the casing 20 includes a notch G on the outside of the sixth surface 27, which reserves installing space for the second electrode terminal 40 so that the second electrode terminal 40 does not protrude, in the first direction X, from the outermost end of the sixth surface 27 along the first direction X.

In some embodiments, the battery cell 6 is symmetrical about a plane perpendicular to the first direction X.

When the battery cells 6 are arranged along the second direction Y, the adjacent battery cells 6 may be interleaved. In other words, for two adjacent battery cells 6, one of the battery cells 6 may be rotated 180° based on the symmetry plane, so that the first electrode terminal 30 of the one of the battery cells 6 may adjacent to, along the second direction Y, the second electrode terminal 40 of the other of the battery cells 6, so as to facilitate the bus component to connect the adjacent battery cells 6 in series.

In some embodiments, the electrode assembly 10 includes a plurality of positive electrode plates 11 and a plurality of negative electrode plates 12, and the plurality of positive electrode plates 11 and the plurality of negative electrode plates 12 are alternately stacked along the second direction Y

Exemplarily, the shape of the positive electrode plate 11 and the shape of the negative electrode plate 12 may fit the shape of the first surface 22.

In the embodiment, both the positive electrode plate 11 and the negative electrode plate 12 are sheet-like structures whose shapes may be adjusted according to the shape of the casing 20, which allows the electrode assembly 10 to fully utilize the internal space of the casing 20, the energy density of the battery cell 6 is increased.

In some embodiments, the casing 20 includes a casing body 20a with an opening and an end cap 20b covering over the opening.

The casing body 20a is a hollow structure within which a space for accommodating the electrode assembly 10 is formed. The shape of the casing body 20a may be determined based on the specific shape of the electrode assembly 10. For example, if the electrode assembly 10 is a cylindrical structure, a cylindrical casing body may be selected; and if the electrode assembly 10 is a cuboid structure, a cuboid casing body may be selected.

The casing body 20a may be a structure with one side open, and one end cap 20b is provided and covers over the opening of the casing body 20a. Alternatively, the casing body 20a may be a structure with two sides open, and two end caps 20b are provided and cover over the two openings of the casing body 20a, respectively.

Exemplarily, the end cap 20b is attached to the casing body 20a by welding, bonding, snap-fitting, or other means.

In some embodiments, the casing body 20a is open at one side along the second direction Y The end cap 20b may be a flat plate structure perpendicular to the second direction Y

In some embodiments, the first surface 22 and the sixth surface 27 are both part of the outer surface of the casing body 20a, and the first electrode terminal 30 and the second electrode terminal 40 are both installed in the casing body 20a.

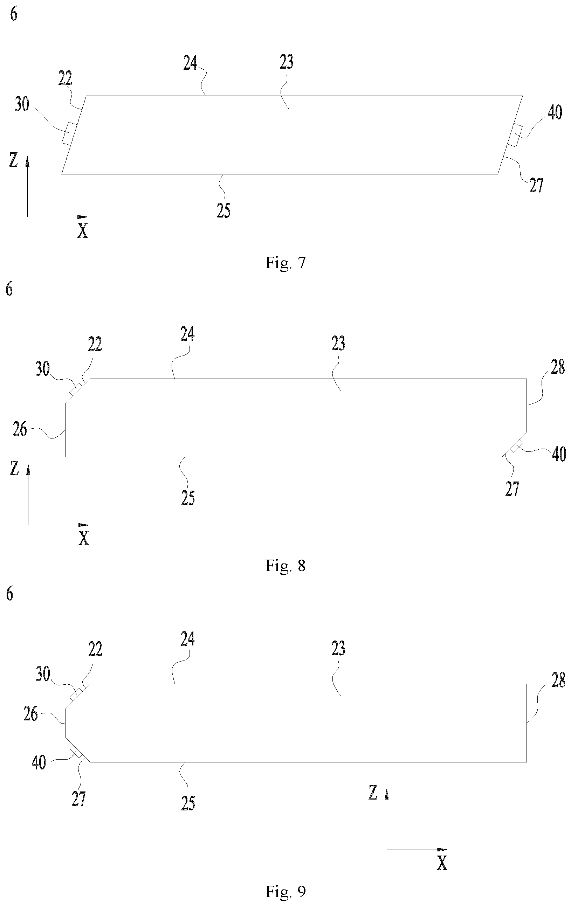

Fig. 7 shows a schematic front view of a battery cell according to some other embodiments of the present application.

As shown in Fig. 7, in some embodiments, the first surface 22 is connected with the third surface 24 and the fourth surface 25.

The embodiment may increase the size of the first surface 22 along the fourth direction to reserve more space for the first electrode terminal 30 in the fourth direction, so as to improve the overcurrent capacity of the first electrode terminal 30.

In some embodiments, the first surface 22 is connected to one end of the third surface 24 along the first direction X and one end of the fourth surface 25 along the first direction X, and the sixth surface 27 is connected to the other end of the third surface 24 along the first direction X and the other end of the fourth surface 25 along the first direction X.

The embodiment may increase the size of the sixth surface 27 to reserve more space for the second electrode terminal 40, so as to improve the overcurrent capacity of the second electrode terminal 40.

In some embodiments, the first surface 22 is parallel to the sixth surface 27.

Exemplarily, the second surface 23 is parallelogram.

Fig. 8 shows a schematic front view of a battery cell according to some other embodiments of the present application.

As shown in Fig. 8, in some embodiments, the outer surface of the casing further includes a fifth surface 26 and a seventh surface 28 respectively located at two ends of the battery cell 6 along the first direction X. Two ends of the fifth surface 26 along the second direction are respectively connected to the two second surfaces 23, two ends of the fifth surface 26 along the third direction Z are respectively connected to the first surface 22 and the fourth surface 25. Two ends of the seventh surface 28 along the second direction are respectively connected to the two second surfaces 23, two ends of the seventh surface 28 along the third direction Z are respectively connected to the sixth surface 27 and the third surface 24. The sixth surface 27 is connected with the fourth surface 25 and inclines towards the third surface 24.

In the embodiment, the casing has two notches at opposite corners to provide installing space for the first electrode terminal 30 and the second electrode terminal 40.

In some embodiments, the battery cell 6 is 180° rotationally symmetrical along an axis parallel to the second direction.

When the battery cells 6 are arranged along the second direction, the adjacent battery cells 6 may be interleaved. In other words, for two adjacent battery cells 6, one of the battery cells 6 may be rotated 180° based on the axis parallel to the second direction, so that the first electrode terminal 30 of the one of the battery cells 6 may adj acent to, along the second direction, the second electrode terminal 40 of the other of the battery cells 6, so as to facilitate the bus component to connect the adjacent battery cells 6 in series.

Fig. 9 shows a schematic front view of a battery cell according to some other embodiments of the present application.

As shown in Fig. 9, in some embodiments, the sixth surface 27 is connected to an end of the fourth surface 25 close to the first surface 22 along the first direction X, and the sixth surface 27 inclines with respect to the fourth surface 25 along a direction facing the first surface 22.

In the embodiment, the first electrode terminal 30 and the second electrode terminal 40 are installed at the same end of the battery cell 6, which facilitates simplifying the connection of the first electrode terminal 30 and the second electrode terminal 40 with the bus component when a plurality of battery cells 6 are assembled into a group.

In some embodiments, the battery cell 6 is symmetrical about a plane perpendicular to the third direction Z.

When the battery cells 6 are arranged along the second direction, the adjacent battery cells 6 may be interleaved. In other words, for two adjacent battery cells 6, one of the battery cells 6 may be rotated 180° based on the symmetry plane, so that the first electrode terminal 30 of the one of the battery cells 6 may adjacent to, along the second direction, the second electrode terminal 40 of the other of the battery cells 6, so as to facilitate the bus component to connect the adjacent battery cells 6 in series.

In some embodiments, the outer surface of the casing further includes a fifth surface 26 and a seventh surface 28 respectively located at two ends of the battery cell 6 along the first direction X. Two ends of the fifth surface 26 along the second direction are respectively connected to the two second surfaces 23, two ends of the fifth surface 26 along the third direction Z are respectively connected to the first surface 22 and the sixth surface 27. Two ends of the seventh surface 28 along the second direction are respectively connected to the two second surfaces 23, two ends of the seventh surface 28 along the third direction Z are respectively connected to the third surface 24 and the fourth surface 25.

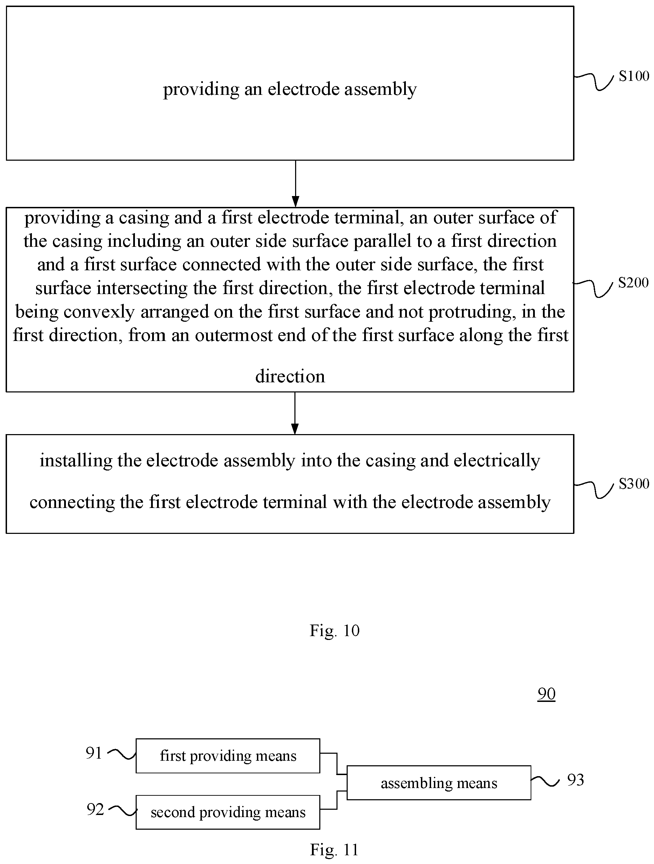

Fig. 10 shows a schematic flowchart of a method for manufacturing a battery cell according to some embodiments of the present application.

As shown in Fig. 10, the embodiments of the present application provide a method for manufacturing a battery cell, including:

S100: providing an electrode assembly;
S200: providing a casing and a first electrode terminal, an outer surface of the casing including an outer side surface parallel to a first direction and a first surface connected with the outer side surface, the first surface intersecting the first direction, the first electrode terminal being convexly arranged on the first surface and not protruding, in the first direction, from an outermost end of the first surface along the first direction; and
S300: installing the electrode assembly into the casing and electrically connecting the first electrode terminal with the electrode assembly; in which the outer side surface is arranged surrounding the electrode assembly.

It should be noted that, for the related structure of the battery cell manufactured by the above method, reference may be made to the battery cell according to the above embodiments.

In manufacturing a battery cell based on the above method, it is not necessary to perform the steps in sequence as above, that is, the steps may be performed in the order described in the embodiments, or in an order different from the order described in the embodiments, or several steps may be performed simultaneously. For example, the steps S100 and S200 are not in a particular order and may be performed simultaneously.

Fig. 11 shows a schematic block diagram of a system for manufacturing a battery cell according to some embodiments of the present application.

As shown in Fig. 11, the embodiments of the present application provide a system 90 for manufacturing a battery cell, including:

a first providing means 91 for providing an electrode assembly;
a second providing means 92 for providing a casing and a first electrode terminal, an outer surface of the casing including an outer side surface parallel to a first direction and a first surface connected with the outer side surface, the first surface intersecting the first direction, the first electrode terminal being convexly arranged on the first surface and not protruding, in the first direction, from an outermost end of the first surface along the first direction; and
an assembling means 93 for installing the electrode assembly into the casing and electrically connecting the first electrode terminal with the electrode assembly; in which the outer side surface is arranged surrounding the electrode assembly.

For the related structure of the battery cell manufactured by the above system, reference may be made to the battery cell according to the above embodiments.

It should be noted that the embodiments in the present application and features in the embodiments may be combined without conflict.

Moreover, it should be noted that the above embodiments are only for illustrating, rather than for limiting, the technical solutions of the present application. Although the present application has been described in detail with reference to the foregoing embodiments, those of ordinary skill in the art should understand that it is still possible to modify the technical solutions recited in the foregoing embodiments, or make equivalent replacements to some of the technical features thereof, and these modifications or replacements do not cause the essence of the corresponding technical solutions deviate from the gist and scope of the technical solutions of the embodiments of the present application.

**Claims**

1. A battery cell, comprising:

    an electrode assembly;
    a casing for accommodating the electrode assembly, an outer surface of the casing comprising an outer side surface parallel to a first direction and a first surface connected with the outer side surface, the outer side surface being arranged surrounding the electrode assembly, the first surface intersecting the first direction; and
    a first electrode terminal convexly arranged on the first surface and for electrically connecting with the electrode assembly, the first electrode terminal not protruding, in the first direction, from an outermost end of the first surface along the first direction.

2. The battery cell of claim 1, wherein in a direction perpendicular to the first direction, the first electrode terminal does not protrude from the outer side surface.

3. The battery cell of claim 1 or 2, wherein:

    the outer side surface comprises two second surfaces arranged oppositely along a second direction, and a third surface and a fourth surface arranged oppositely along a third direction;
    each of the second surfaces is connected with the third surface and the fourth surface;
    the first direction, the second direction and the third direction are perpendicular to each other;
    the first surface is connected to an end of the third surface along the first direction and inclines towards the fourth surface relative to the third surface; and
    the first surface is connected with the two second surfaces.

4. The battery cell of claim 3, wherein an angle between the first surface and the third surface is $\theta$, and $90° < \theta < 180°$.

5. The battery cell of claim 4, wherein $120° \leq \theta \leq 150°$.

6. The battery cell of any one of claims 3-5, wherein:

    a size of the first surface along a fourth direction is L, a size of the first electrode terminal along the fourth direction is W, the fourth direction is parallel to the first surface and perpendicular to the second direction;
    a size of a part of the first electrode terminal protruding from the first surface along a fifth direction is H, the fifth direction is perpendicular to the first surface; and

L, W, H and $\theta$ satisfy:

$$W \leq L\text{-}H/(\cos\theta\sin\theta).$$

7. The battery cell of any one of claims 3-6, wherein the second surface is a surface having the largest area among all surfaces of the casing.

8. The battery cell of any one of claims 3-7, wherein the first surface is connected with the third surface and the fourth surface.

9. The battery cell of any one of claims 3-7, wherein the outer surface of the casing further comprises a fifth surface perpendicular to the first direction and connected with the two second surfaces, and the fifth surface is connected to an end of the first surface away from the third surface; and
   the fifth surface is located at an outermost end of the battery cell along the first direction.

10. The battery cell of any one of claims 3-7, wherein:

    the outer surface of the casing further comprises a sixth surface connected with the two second surfaces; and
    the battery cell further comprises a second electrode terminal convexly arranged on the sixth surface and for electrically connecting with the electrode assembly, wherein the second electrode terminal is not protruding, in the first direction, from an outermost end of the sixth surface along the first direction.

11. The battery cell of claim 10, wherein the first surface and the sixth surface are respectively connected to two ends of the third surface along the first direction.

12. The battery cell of claim 11, wherein:

    the first surface is connected to one end of the third surface along the first direction and one end of the fourth surface along the first direction, and
    the sixth surface is connected to the other end of the third surface along the first direction and the other end of the fourth surface along the first direction.

13. The battery cell of claim 12, wherein the first surface is parallel to the sixth surface.

14. The battery cell of claim 11, wherein:

    the outer surface of the casing further comprises a fifth surface and a seventh surface respectively located at two ends of the battery cell along the first direction;

two ends of the fifth surface along the second direction are respectively connected to the two second surfaces, two ends of the fifth surface along the third direction are respectively connected to the first surface and the fourth surface; and

two ends of the seventh surface along the second direction are respectively connected to the two second surfaces, two ends of the seventh surface along the third direction are respectively connected to the sixth surface and the fourth surface.

15. The battery cell of claim 14, wherein the battery cell is symmetrical about a plane perpendicular to the first direction.

16. The battery cell of claim 10, wherein:

the outer surface of the casing further comprises a fifth surface and a seventh surface respectively located at two ends of the battery cell along the first direction;

two ends of the fifth surface along the second direction are respectively connected to the two second surfaces, two ends of the fifth surface along the third direction are respectively connected to the first surface and the fourth surface;

two ends of the seventh surface along the second direction are respectively connected to the two second surfaces, two ends of the seventh surface along the third direction are respectively connected to the sixth surface and the third surface; and

the sixth surface is connected with the fourth surface and inclines towards the third surface.

17. The battery cell of claim 10, wherein:

the sixth surface is connected to an end of the fourth surface close to the first surface along the first direction, and

the sixth surface inclines with respect to the fourth surface along a direction facing the first surface.

18. The battery cell of claim 17, wherein the battery cell is symmetrical about a plane perpendicular to the third direction.

19. The battery cell of claim 17 or 18, wherein:

the outer surface of the casing further comprises a fifth surface and a seventh surface respectively located at two ends of the battery cell along the first direction;

two ends of the fifth surface along the second direction are respectively connected to the two second surfaces, two ends of the fifth surface along the third direction are respectively connected to the first surface and the sixth surface; and

two ends of the seventh surface along the second direction are respectively connected to the two second surfaces, two ends of the seventh surface along the third direction are respectively connected to the third surface and the fourth surface.

20. The battery cell of any one of claims 3-19, wherein the electrode assembly comprises a plurality of positive electrode plates and a plurality of negative electrode plates, and the plurality of positive electrode plates and the plurality of negative electrode plates are alternately stacked along the second direction.

21. The battery cell of any one of claims 1-20, wherein a maximum size of the battery cell along the first direction is in a range of 200 mm-2000 mm.

22. A battery comprising a plurality of the battery cells of any one of claims 1-21.

23. An electrical device comprising the battery cell of any one of claims 1-21 for providing electrical energy.

24. A method for manufacturing a battery cell, comprising:

providing an electrode assembly;

providing a casing and a first electrode terminal, an outer surface of the casing comprising an outer side surface parallel to a first direction and a first surface connected with the outer side surface, the first surface intersecting the first direction, the first electrode terminal being convexly arranged on the first surface and not protruding, in the first direction, from an outermost end of the first surface along the first direction; and

installing the electrode assembly into the casing and electrically connecting the first electrode terminal with the electrode assembly;

wherein the outer side surface is arranged surrounding the electrode assembly.

25. A system for manufacturing a battery cell, comprising:

a first providing means for providing an electrode assembly;

a second providing means for providing a casing and a first electrode terminal, an outer surface of the casing comprising an outer side surface parallel to a first direction and a first surface connected with the outer side surface, the first surface intersecting the first direction, the first electrode terminal being convexly arranged on the first surface and not protruding, in the first direction, from an outermost end of the first surface along the first direction; and

an assembling means for installing the electrode assembly into the casing and electrically connecting the first electrode terminal with the electrode assembly;

wherein the outer side surface is arranged surrounding the electrode assembly.

1

Fig. 1

2

Fig. 2

6

40

G

20

30

G

Z

X

Y

Fig. 3

6

B

22

24

A

23

30

27

40

26

28

25

A

D

Z

X

23

21 { 24

25

Fig. 4

Fig. 5

Fig. 6

6

Fig. 7

6

Fig. 8

6

Fig. 9

providing an electrode assembly                                           S100

providing a casing and a first electrode terminal, an outer surface of
the casing including an outer side surface parallel to a first direction
and a first surface connected with the outer side surface, the first
surface intersecting the first direction, the first electrode terminal       S200
being convexly arranged on the first surface and not protruding, in the
first direction, from an outermost end of the first surface along the first

direction

installing the electrode assembly into the casing and electrically
                                                                             S300
connecting the first electrode terminal with the electrode assembly

Fig. 10

90

91 — first providing means

                                    assembling means        93

92 — second providing means

Fig. 11

## INTERNATIONAL SEARCH REPORT

| International application No. |
| --- |
| **PCT/CN2021/128461** |

**A.  CLASSIFICATION OF SUBJECT MATTER**

H01M 50/102(2021.01)i

According to International Patent Classification (IPC) or to both national classification and IPC

**B.  FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 时代新能源, 比亚迪, 面, 斜, 夹角, 角度, 倾角, 端子, 极柱, 螺柱, 接线柱, surface, incline, slant, slope, lean, angle, terminal

**C.  DOCUMENTS CONSIDERED TO BE RELEVANT**

| Category* | Citation of document, with indication, where appropriate, of the relevant passages | Relevant to claim No. |
| --- | --- | --- |
| X | CN 107534101 A (KABUSHIKI KAISHA TOSHIBA et al.) 02 January 2018 (2018-01-02) description, paragraphs [0027]-[0150], and figure 7 | 1-6, 8-20, 22-25 |
| Y | CN 107534101 A (KABUSHIKI KAISHA TOSHIBA et al.) 02 January 2018 (2018-01-02) description, paragraphs [0027]-[0150], and figure 7 | 7, 21 |
| Y | CN 111430601 A (BYD CO., LTD.) 17 July 2020 (2020-07-17) description, paragraphs [0007]-[0031] | 7, 21 |
| X | JP 2015185247 A (HITACHI MAXELL) 22 October 2015 (2015-10-22) description, paragraphs [0030]-[0115] | 1-9, 20-25 |
| A | CN 105374958 A (SAMSUNG SDI CO., LTD.) 02 March 2016 (2016-03-02) entire document | 1-25 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 April 2022** | **25 May 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/128461**

| Patent document cited in search report | | | Publication date (day/month/year) | Patent family member(s) | | | Publication date (day/month/year) |
|---|---|---|---|---|---|---|---|
| CN | 107534101 | A | 02 January 2018 | JP | WO2016199939 | A1 | 11 January 2018 |
| | | | | US | 2018102528 | A1 | 12 April 2018 |
| | | | | WO | 2016199939 | A1 | 15 December 2016 |
| | | | | EP | 3309856 | A1 | 18 April 2018 |
| | | | | EP | 3309856 | A4 | 19 December 2018 |
| | | | | JP | 6530068 | B2 | 12 June 2019 |
| | | | | US | 10559806 | B2 | 11 February 2020 |
| | | | | CN | 107534101 | B | 04 September 2020 |
| | | | | EP | 3309856 | B1 | 30 December 2020 |
| CN | 111430601 | A | 17 July 2020 | CN | 111430601 | B | 07 January 2022 |
| JP | 2015185247 | A | 22 October 2015 | | None | | |
| CN | 105374958 | A | 02 March 2016 | KR | 20160020060 | A | 23 February 2016 |
| | | | | EP | 2985807 | A1 | 17 February 2016 |
| | | | | JP | 2016042464 | A | 31 March 2016 |
| | | | | US | 2016049623 | A1 | 18 February 2016 |
| | | | | EP | 2985807 | B1 | 01 August 2018 |
| | | | | US | 10044008 | B2 | 07 August 2018 |
| | | | | CN | 105374958 | B | 20 March 2020 |
| | | | | JP | 6769590 | B2 | 14 October 2020 |
| | | | | KR | 102273786 | B1 | 06 July 2021 |

Form PCT/ISA/210 (patent family annex) (January 2015)